Europäisches Patentamt

European Patent Office

Office européen des brevets

(19)

(11) Numéro de publication: **0 043 761**
**B1**

(12) **FASCICULE DE BREVET EUROPEEN**

(45) Date de publication du fascicule du brevet:
**01.08.84**

(51) Int. Cl.³: **H 02 M 3/335**

(21) Numéro de dépôt: **81401050.0**

(22) Date de dépôt: **30.06.81**

(54) Circuit de commande d'un transistor de commutation dans un convertisseur statique et convertisseur le comportant.

(30) Priorité: **04.07.80 FR 8014912**

(43) Date de publication de la demande:
**13.01.82 Bulletin 82/2**

(45) Mention de la délivrance du brevet:
**01.08.84 Bulletin 84/31**

(84) Etats contractants désignés:
**DE GB IT NL**

(56) Documents cités:
**DE - A - 2 651 196**
**FR - A - 2 285 739**
**GB - A - 2 018 529**

(73) Titulaire: **SOCIETE D'ELECTRONIQUE DE LA REGION PAYS DE LOIRE SEREL, 74, rue du Surmelin, F-75020 Paris (FR)**

(72) Inventeur: **Lauret, Philippe, THOMSON-CSF SCPI 173, bld Haussmann, F-75360 Paris Cedex 08 (FR)**

(74) Mandataire: **Schmolka, Robert et al, THOMSON-CSF SCPI 173, Bld Haussmann, F-75379 Paris Cedex 08 (FR)**

ACTORUM AG

## Description

La présente invention concerne un circuit de commande de la base d'un transistor de commutation dans un dispositif d'alimentation à découpage (ou convertisseur continu-continu) ou dans un onduleur (ou convertisseur continu-alternatif), de type parallèle avec isolement par rapport au secteur et un dispositif convertisseur comportant un tel circuit de commande.

Divers dispositifs d'alimentation à découpage connus, destinés notamment à l'alimentation de récepteurs de télévision, ont été décrits dans l'article de G. van Schaik intitulé «An introduction to switched-mode power supplies in TV receivers» aux pages 93 à 108 du no 3, du Vol. 34, de september 1976 de la revue néerlandaise en langue anglaise «Electronic Applications Bulletin» de Philips' ou aux pages 181 à 195 de la revue britannique «Mullard Technical Communications» no 135 de juillet 1977, et leurs circuits de commande ont été décrits dans l'article du même auteur intitulé «Control circuits for SMPS in TV receivers», aux pages 162 à 180 du no 4, du Vol. 34, de décembre 1976 de la revue néerlandaise précitée ou aux pages 210 à 226 du no 136 d'octobre 1977 de la revue britannique précitée.

Le circuit commandant la base du transistor de commutation ou de découpage dont le trajet collecteur-émetteur est relié en série avec l'enroulement primaire d'un transformateur d'alimentation entre les bornes de sortie d'un montage redresseur de la tension alternative du réseau, comprend ici généralement un étage d'attaque (dit «driver» en anglais) équipé d'un autre transistor de commutation monté en émetteur commun, dont le circuit collecteur comprend l'enroulement primaire d'un transformateur d'impulsion dont l'enroulement secondaire est connecté entre la base et l'émetteur du transistor de découpage. L'étage d'attaque et le circuit de commande du transistor équipant celui-ci doivent alors également être alimentés à partir du montage redresseur susmentionné, ce circuit de commande comprenant un modulateur de largeur d'impulsions (dit «pulse width modulator» en anglais) qui permet la régulation par la variation du rapport cyclique des périodes de saturation et de blocage du transistor de découpage en fonction de la tension de sortie, ainsi qu'un oscillateur permettant le démarrage autonome du dispositif, qui est, en outre, synchronisable avec le balayage-ligne.

Dans la publication FR-A-1 403 260 (et US-A-3 317 816 correspondante), il a été proposé d'utiliser pour l'alimentation de la base de chaque transistor de commutation pendant qu'il est conducteur, un courant de réaction variant avec le courant collecteur de celui-ci. On a inséré, à cette fin, entre l'enroulement primaire du transformateur d'alimentation ou de sortie et le collecteur du transistor de commutation, l'enroulement primaire d'un transformateur de courant dont l'enroulement secondaire est connecté entre la base et l'émetteur de ce transistor, de façon à obtenir un courant de base qui varie dans le même sens que son courant collecteur. Il suffit alors d'appliquer à cette base, à partir d'un générateur de signaux périodiques extérieur, une brève impulsion permettant de démarrer la conduction du transistor pour qu'il soit amené à la saturation par réaction positive, c'est-à-dire de manière régénérative. Par la suite, le courant collecteur du transistor saturé subit des variations en fonction de la charge alimentée qui, lorsqu'elle est inductive, lui imposera un courant collecteur linéairement croissant, entraînant un courant de base croissant de manière analogue. Le blocage du transistor de commutation est commandé par l'amorçage d'un thyristor dont le trajet anode-cathode est connecté en parallèle avec l'enroulement secondaire du transformateur de courant afin de le court-circuiter. Les bornes du montage série composé du transistor et de l'enroulement primaire du transformateur de courant sont respectivement reliées à l'anode et à la cathode d'une diode de récupération parallèle. Les circuits décrits et illustrés sont ici de type push-pull ou en pont.

Un circuit de commande analogue pour dispositif d'alimentation comprenant un transistor de découpage unique, connecté en série avec les enroulements primaires respectives d'un transformateur de courant et d'un transformateur d'alimentation entre les bornes d'une source de tension continue a été décrit dans la publication US-A-3 925 717. L'enroulement secondaire du transformateur de courant est connecté ici entre l'émetteur et la base du transistor, par l'intermédiaire d'une diode qui est connectée pour conduire dans le même sens que la jonction base-émetteur de celui-ci dont la conduction est amorcée à l'aide d'une résistance réunissant la base au pôle positif de la source continue et dont le blocage est commandé ici à l'aide d'un autre transistor dont le trajet collecteur-émetteur réunit ensemble, lorsqu'il est saturé, la base et l'émetteur du transistor de découpage, l'enroulement primaire du transformateur de courant étant connecté en parallèle avec une diode d'amortissement.

Dans les articles et publications précités, au moins les débuts du blocage et/ou de la conduction du ou des transistors de commutation de puissance des convertisseurs statiques (continu-continu ou continu-alternatif) sont commandés à l'aide d'un signal rectangulaire récurrent, provenant d'un oscillateur indépendant (pouvant être synchronisé avec la fréquence de ligne, selon les articles de G. van Schaik précités). Dans la publication US-A-3 925 717, c'est la saturation de l'autre transistor (de commande) qui commande le blocage du transistor de découpage et son blocage qui autorise la conduction de ce dernier au moyen de la résistance de polarisation de la base.

Des alimentations à découpage auto-oscillants, ne nécessitant pas de générateur de signaux de commande extérieur, avec régulation de la ou des tensions de sortie contre des fluctuations de la charge et de la tension du réseau alternatif et avec protection du transistor de commutation contre des dépassements des valeurs admissibles de son courant collecteur, ont été décrits dans les publications DE-B-21 60 659, 23 36 111 et 24 17 628 (cette dernière correspondant à la publication FR-A-2 267 654).

Les publications DE-B-21 60 659, 23 36 110 et 24 17 628 (Siemens) décrivent respectivement différents modes de réalisation d'un dispositif d'alimentation par découpage ou convertisseur continu-continu auto-oscillant, comportant un transistor de commutation dont le circuit collecteur comprend un premier enroulement d'un transformateur d'impulsions, connectés entre les bornes de sortie d'un montage redresseur à pont de diodes, un circuit de commande du transistor comprenant un enroulement secondaire, dit de réaction, de ce transformateur qui est couplé entre la base et l'émetteur de celui-ci et qui maintient le transistor dans ses états saturé ou bloqué, un circuit de blocage du transistor comportant un thyristor dont l'anode est couplée à la base du transistor, dont la cathode est réunie, soit directement (DE-B-23 36 110 et 24 17 628), soit par l'intermédiaire d'une pile (composée d'un condensateur en parallèle avec une diode et l'un des enroulements secondaires du transformateur en série-voir DE-B-21 60 659), à celle des bornes d'une résistance de mesure du courant émetteur et de protection qui est également reliée au pôle négatif du montage redresseur et dont l'autre borne est reliée à l'émetteur du transistor. Lorsque la pile n'est pas insérée entre la cathode du thyristor et la résistance de mesure, elle peut l'être entre la base du transistor et l'anode du thyristor, afin que l'amorçage de celui-ci provoque un blocage rapide de celui-là.

La gâchette du thyristor de blocage est alimentée, d'une part, par un étage comparateur comprenant un transistor de type PNP dont l'émetteur reçoit une tension de référence fixe d'une diode Zener, dont la base reçoit une tension de comparaison proportionnelle à l'amplitude des impulsions de tension aux bornes des enroulements du transformateur et dont le collecteur fournit un courant proportionnel à la différence entre les tensions de comparaison et de référence, et d'autre part, par une tension proportionnelle au courant émetteur du transistor de commutation, prélevée aux bornes de la résistance de mesure et de protection et croissant linéairement avec le temps pendant l'état saturé de celui-ci. De cette façon, on obtient, d'une part, la régulation de l'amplitude des impulsions de tension aux bornes des enroulements du transformateur par la variation de la durée de l'état saturée du transistor de commutation, du fait que la pente de croissance du courant émetteur et donc de la chute de tension aux bornes de la résistance de mesure qui s'ajoute à celle dûe au courant collecteur du transistor comparateur, est constante (pour une tension d'alimentation constante) et déterminée par l'inductance de l'enroulement dans le circuit collecteur du transistor de commutation et que, par conséquent, la durée de l'état saturé de celui-ci est une fonction inverse de l'amplitude des impulsions de tension précitées, et d'autre part, une protection contre le dépassement d'une valeur maximale prédéterminée du courant émetteur de ce transistor au démarrage du circuit, du fait qu'en l'absence de tension de comparaison et donc du courant collecteur du transistor comparateur, l'amorçage du thyristor est commandé uniquement par la chute de tension aux bornes de la résistance de mesure. Le démarrage du circuit lors de sa mise sous tension est obtenue, selon la DE-B-21 60 659, à l'aide d'une résistance de démarrage (de plusieurs dizaines de kiloohms) réunissant la base du transistor de commutation au pôle positif du montage redresseur.

Le blocage du transistor de commutation ayant été provoqué par l'amorçage du thyristor dû à l'effet conjugué d'une tension continue proportionnelle à celle de sortie et de la croissance linéaire de son courant émetteur à pente constante, la durée de son état bloqué est déterminée par la somme des courants débités dans les charges, par l'intermédiaire des diodes de redressement, par tous les enroulements du transformateur. Ces courants étant linéairement décroissants, ils provoquent aux bornes de l'enroulement de réaction une tension négative appliquée à la base du transistor de commutation, qui y est maintenue jusqu'à leur annulation. Cette annulation provoque, aux bornes de l'enroulement de réaction une transition positive vers une tension nulle avec un début de suroscillation qui polarise la jonction base-émetteur du transistor de commutation pour qu'il se mette à conduire de nouveau et pour que l'effet cumulatif de la réaction l'amène rapidement à la saturation.

Dès que le transistor de commutation est saturé, son courant collecteur traversant l'inductance de l'enroulement de travail du transformateur, devient linéairement croissant de manière à produire aux bornes de l'enroulement de réaction une tension positive de niveau constant qui le maintient saturé jusqu'au prochain amorçage du thyristor. Lorsque le courant consommé par la charge augmente, la durée de l'état saturé du transistor de commutation, qui détermine l'énergie emmagasinée dans l'enroulement de travail du transformateur ($1/2\ LI^2_{MAX}$), augmente également. Il en résulte une diminution concomitante de la fréquence d'auto-oscillation du circuit.

D'autres types d'alimentations par découpage à commutation commandée à l'aide d'un générateur d'impulsions récurrentes, dans lequel l'inductance de découpage emmagasinant l'énergie pendant les périodes de saturation du transistor de découpage, qui comprend également l'enroulement primaire d'un transformateur, est accordée à l'aide d'un condensateur d'accord, connecté en parallèle avec soit ce transistor ou cet enroulement, pour former avec elle un circuit résonnant parallèle, qui fournit une demi-période d'oscillation lors de chacun des blocages du transistor de découpage, ont été décrits dans les publications DE-B-1 234 836, FR-A-2 272 092, 2 374 768, 2 382 812 et EP-A-0 005 391.

Dans les publications DE-B-1 234 836, FR-A-2 272 092 (ou US-A-3 999 102) et EP-A-0 005 391 (ou FR-A-2 425 186), les transistors de découpage sont montés en anti-parallèle avec des diodes de commutation (ou de récupération) pour former ensemble des interrupteurs de découpage à conduction bidirectionnelle et à commande unidirectionnelle, tandis que dans les publications FR-A-2 374 768 et 2 382 812 l'interrupteur n'est qu'unidirectionnel et la régulation y est effectué par la variation de rapport cyclique (c'est-à-dire par la durée de l'état conducteur du transistor et donc par la fréquence de récurrence, par exemple).

Dans les publications FR-A-2 272 092 (modes de réalisation des figures 6 et 14) et EP-A-0 005 391 précitées, où les circuits de découpage comprenant en série un interrupteur bidirectionnel commandé et une inductance résonnant avec un condensateur d'accord, sont combinés à des étages de sortie du balayage-ligne qu'ils alimentent à travers le transformateur-ligne dont un enroulement, dit d'alimentation fait partie de l'inductance de découpage et dont un autre enroulement charge le condensateur réservoir alimentant notamment cet étage de sortie, la régulation est effectuée par la variation du retard (ou déphasage) entre les instants de coupure respectifs des interrupteurs de balayage et de découpage à l'aide d'un générateur de retard variable en fonction d'une grandeur électrique dérivée de la tension aux bornes du condensateur réservoir. La base du transistor de découpage y est commandée à l'aide d'un circuit d'attaque («driver» en anglais) qui dans la publication EP-A-0 005 391 (figure 6) comporte en cascade un étage déphaseur («phase splitter» en anglais) et un étage de sortie de type «push-pull» à deux transistors en série, et qui est commandé par un multivibrateur astable au démarrage et synchronisé par le générateur de retard variable qui est déclenché par des impulsions de retour-ligne prélevées sur un enroulement auxiliaire du transformateur-ligne.

Dans la publication EP-A-0 005 391, l'inductance de découpage se compose de l'inductance de fuite de l'enroulement du transformateur-ligne et d'une bobine de choc à noyau ferromagnétique connectées en série avec l'interrupteur bidirectionnel de découpage entre les bornes d'une source d'alimentation continue, l'inductance de découpage devant être supérieure à celle des bobines de déviation-ligne ramenée dans le circuit de découpage par le transformateur-ligne.

Dans les circuits des articles et des publications mentionnés ci-dessus, les circuits d'attaque du transistor de découpage et les circuits de commande ou de régulation (générateur de retard variable ou modulateur de largeur d'impulsion) doivent disposer d'une alimentation autonome en basses tensions continues pour permettre leur démarrage à la mise sous tension (branchement au réseau alternatif, par exemple), le circuit de découpage étant alimenté par la tension du réseau redressée et filtrée (300 volts continus environ pour 220 volts efficaces à 50 Hz).

Un circuit de commande de la base du transistor de découpage formant avec le circuit de découpage suivant la publication EP-A-0 005 391 un montage auto-oscillant suivant l'enseignement des publications DE-B-21 60 659, 23 36 111 ou 24 17 628, pour permettre son démarrage autonome à la mise sous tension du circuit et l'autoalimentation de la base du transistor de découpage pendant son fonctionnement normal conjugué avec celui du circuit de balayage-ligne qu'il alimente, lorsque le condensateur réservoir devient suffisamment chargé pour permettre le démarrage de l'oscillateur-ligne, a été décrit dans la publication FR-A-2 460 579 (correspondant au préambule de la revendication 1) et illustré sur la figure 1 du dessin annexé. Ce circuit de commande 10 comporte un enroulement, dit de réaction, 11 bobiné sur le même noyau ferromagnétique 12 que la bobine de choc 13 formant avec l'inductance de fuite de l'enroulement d'alimentation 31 du transformateur-ligne 30, connectée en série avec elle, l'inductance de découpage. Les enroulements 11, 13 et leur noyau 12 forment donc un autre transformateur 14. L'enroulement de réaction 11 est respectivement couplé par ses bornes à la base et à l'émetteur du transistor de découpage 1, notamment par l'intermédiaire d'une résistance 15 de limitation du courant de base pour appliquer à celle-ci une tension en opposition de phase avec sa tension collecteur. Cette base est réunie, en outre, au même pôle 6 de la source d'alimentation 5 que le collecteur, par l'intermédiaire d'une résistance 16, dite de démarrage, qui la polarise de telle sorte que le transistor 1 se met à conduire dès la mise sous haute-tension du circuit de découpage 20. Le blocage du transistor de découpage 1 y est commandé à l'aide d'un thyristor 17 dont l'anode est couplée à la base du transistor par l'intermédiaire d'une source de tension continue 18 (dite «pile») permettant la polarisation inverse de sa jonction base-émetteur et dont la cathode est reliée à l'autre pôle 7 de la source d'alimentation 5 qui est également réunie à l'émetteur du transistor 1 à travers une résistance de protection 19. La gâchette du thyristor 17 étant réunie à l'émetteur du transistor 1 par l'intermédiaire d'une résistance de gâchette 21, la chute de tension provoquée par le courant émetteur croissant de celui-ci (dû à la charge inductive dans son circuit collecteur) parcourant la résistance de protection 19, est appliquée entre la gâchette et la cathode du thyristor 17 de manière à commander son amorçage, lorsque cette chute de tension dépasse le seuil de cet amorçage. L'amorçage du thyristor 17 permet l'évacuation rapide des porteurs de charge minoritaires de la base de sorte que le transistor 1 se bloque après un intervalle appelé temps de stockage ($T_s$). Dès que le transistor 1 est bloqué, l'énergie emmagasinée dans l'inductance de découpage 13 s'écoule de manière oscillatoire à travers le condensateur d'accord 3 de sorte qu'une impulsion de tension positive de forme sensiblement demi-sinusoïdale apparaît sur son collecteur entraînant l'application par l'enroulement de réaction 11 d'une forme d'onde analogue mais de polarité opposée à la base, de sorte que le transistor 1 est maintenu bloqué. Le couplage de l'enroulement de réaction 11 à la base du transistor de découpage 1 est effectué à l'aide de moyens connus 22 permettant de retarder au moins légèrement sa repolarisation positive par rapport à l'instant d'annulation de sa tension collecteur en fin d'oscillation, afin que la diode 2 montée en anti-parallèle avec son trajet collecteur-émetteur puisse être amené à conduire un courant de sens opposé, croissant vers une valeur nulle. Le courant de la diode 2 de l'interrupteur de découpage 4 ainsi que le courant oscillatoire du circuit résonnant parcourant condensateur d'accord 3, parcourent également la résistance de protection 19 qui peut alors dissiper une puissance non négligeable de façon à réduire le rendement de l'alimentation par découpage ainsi constituée.

Par ailleurs, pendant que le transistor de découpage 1 est conducteur, son courant de base est fourni par enroulement de réaction 11 magnétiquement couplé à la bobine 13 de l'inductance de découpage, de sorte que toute perturbation de la tension aux bornes de celle-ci, notamment celle dûe au fonctionnement de l'étage de sortie du balayage-ligne 40 engendrant des impulsions de retour-ligne aux bornes de l'enroulement d'alimentation 31 du transformateur-ligne 30, est transmise à la base du transistor 1 qui peut devenir ainsi temporairement désaturé de façon à l'endommager ou à conduire à des pertes supplémentaires en le chauffant. Un enroulement auxiliaire 32 du transformateur-ligne 33 est alors relié entre l'une des bornes de l'enroulement de réaction 11 et l'émetteur du transistor 1 pour compenser (réduire ou annuler) les impulsions de retour-ligne qui lui proviennent à l'étage de sortie 40 par l'intermédiaire de l'enroulement 33 du transformateur-ligne 30 qui est en série avec le condensateur réservoir 41 et de l'enroulement d'alimentation 31 magnétiquement couplé à celui-là et de la bobine 13. On remarquera ici que l'enroulement auxiliaire 32 alimente également l'entrée 51 du générateur de retard variable 50 pour son déclenchement, pour la régulation par la variation du retard en fonction de l'une des amplitudes des impulsions de retour-ligne et pour son alimentation par le redressement de ces dernières. Les impulsions retardées fournies par la sortie 52 du générateur 50 sont appliquées à la gâchette du thyristor 17 au moyen d'un condensateur de couplage 23 afin de provoquer, par l'amorçage du thyristor 17, le blocage du transistor de découpage 1, lorsque le circuit de balayage-ligne 40 fonctionne normalement.

Le circuit de commande (ou d'attaque) de la présente invention permet d'éviter les inconvénients des circuits décrits ci-dessus, notamment les pertes dans la résistance de protection qui y est absente du circuit émetteur du transistor de découpage et les perturbations dûes au fonctionnement de l'étage de sortie du balayage, lorsqu'il est combiné avec le dispositif d'alimentation par découpage de la façon décrite ci-dessus.

L'invention a pour objet un circuit de commande d'un transistor de commutation de puissance dans un convertisseur continu-continu ou continu-alternatif comprenant, connectée en série avec le trajet collecteur-émetteur de ce transistor entre les pôles d'une source de tension continue d'alimentation, une inductance de découpage emmagasinant l'énergie électrique fournie par la source pendant la conduction du transistor dont l'émetteur relié à l'un des pôles de la source, constitue un point de potentiel de référence, le circuit de commande comportant un transformateur de courant dont l'enroulement primaire est inséré entre le collecteur du transistor et l'inductance et dont l'enroulement secondaire est couplé entre l'émetteur et la base du transistor de façon à fournier à cette dernière un courant qui varie sensiblement proportionnellement à son courant collecteur pour l'amener et le maintenir en saturation, un thyristor réuni entre les bornes de l'enroulement secondaire de manière à commander le blocage du transistor en court-circuitant cet enroulement, lorsque le thyristor est amorcé, et une résistance de polarisation de la base du transistor réunissant celle-ci au même pôle de la source que celui réuni à son collecteur.

L'invention est caractérisée en ce que la jonction de l'une des bornes de l'enroulement secondaire avec la cathode du thyristor est réunie au moyen d'une résistance de mesure et de protection à l'émetteur du transistor qui est également réuni, par l'intermédiaire d'une résistance de gâchette, à la gâchette du thyristor, afin de commander le déclenchement de ce dernier, lorsque la chute de tension engendrée par le courant de base du transistor aux bornes de la résistance de mesure et de protection atteint le seuil d'amorçage du thyristor.

L'invention sera mieux comprise et d'autres de ses caractéristiques et avantages ressortiront de la description qui suit et des dessins annexés s'y rapportant, sur lesquels:

– La figure 1 est un schéma de principe d'un dispositif d'alimentation à découpage combiné avec l'étage de sortie d'un circuit de balayage-ligne qu'il alimente, suivant l'état de la technique représenté par la publication FR-A-2 460 579 précitée;

– la figure 2 est un schéma de principe d'un premier mode de réalisation du circuit de commande d'un transistor de commutation suivant l'invention dans un dispositif d'alimentation par découpage;

– les figures 3A à 3G représentent respectivement des formes d'onde des tensions et des courants à divers points du circuit de la figure 2;

– la figure 4 est un schéma de principe du mode de réalisation préféré du circuit de commande suivant l'invention; et

– les figures 5A et 5B représentent deux formes d'ondes de tension respectivement appliquée à la base du transistor de commutation et présente aux bornes de l'enroulement secondaire 72 du transformateur de courant 70 dans le circuit de la figure 4.

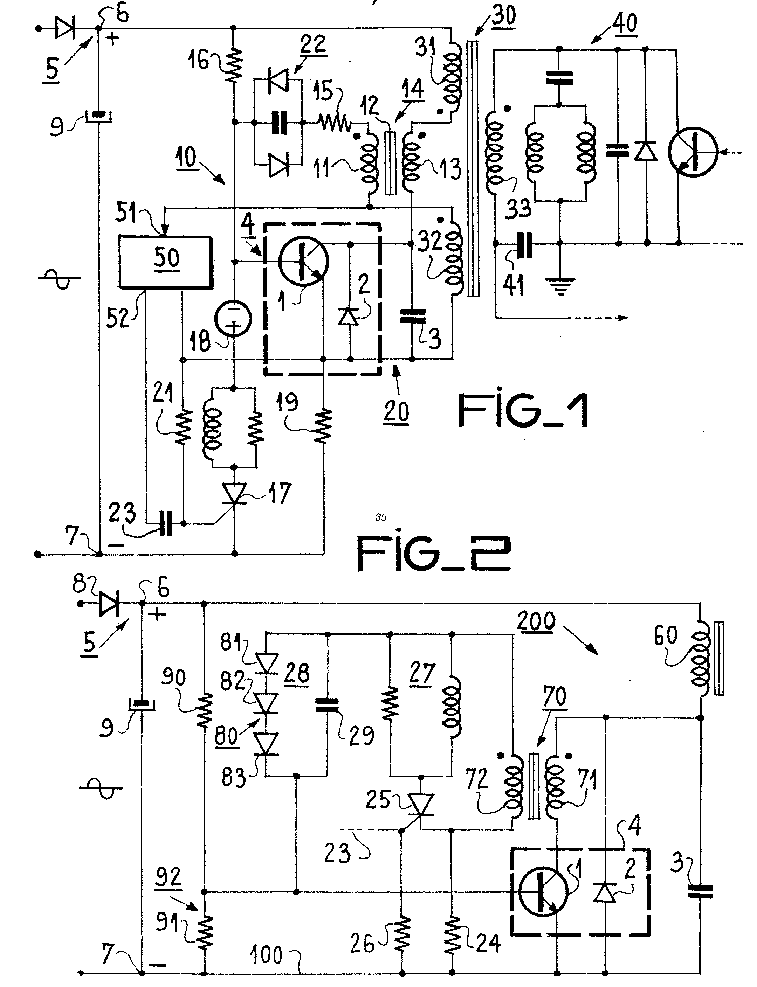

La figure 1 représente un schéma de l'état de la technique qui a été décrit ci-dessus.

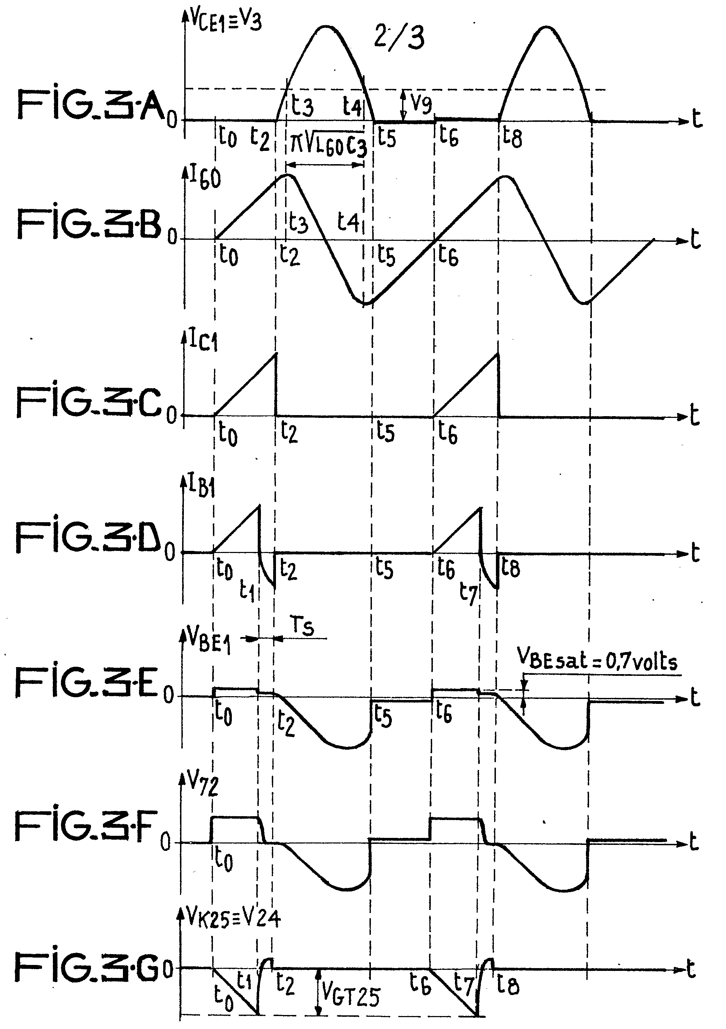

Sur la figure 2 les éléments analogues à ceux du circuit de la figure 1 ont été désignés par les mêmes symboles (nombres de repère), notamment le transistor de commutation de puissance haute-tension du type NPN 1, dit de découpage, qui fait partie avec la diode 2 de découpage (ou de récupération parallèle), connectée en anti-parallèle avec son trajet collecteur-émetteur, de l'interrupteur de découpage 4 qui est dans ce mode de réalisation de type bidirectionnel à commande unidirectionnelle, ainsi que le condensateur d'accord 3 monté en parallèle avec l'interrupteur 4.

Ce condensateur 3 est destiné à former un circuit résonnant parallèle, pendant l'ouverture de l'interrupteur 4, avec une inductance de découpage 60 pouvant être constituée soit par l'enroulement primaire d'un transformateur d'alimentation comme dans les articles de G. van Schaik ou les publications US-A-3 925 717, FR-A-2 374 768 et 2 382 812 ou DE-B-1 234 836, 21 60 659, 23 36 110 ou 24 17 628 précités, soit par un enroulement du transformateur-ligne comme dans la publication FR-A-2 275 092 (US-A-3 999 102), ou encore par le montage série d'un enroulement d'alimentation du transformateur-ligne avec une bobine de choc, comme dans les publications EP-A-0 005 391 ou FR-A-2 460 579. Cette inductance de découpage 60 est connectée en série avec l'interrupteur de découpage 4 qui est monté en parallèle avec le condensateur d'accord 3 entre le pôle positif 6 et négatif 7 d'une source de haute-tension continue 5 formée par un montage redresseur comprenant une diode de redressement 8 et un condensateur de filtrage 9 de type électrochimique. Ce montage redresseur 5 est connecté par ses deux bornes d'entrée respectivement constituées par l'anode de la diode 8 et l'armature négative du condensateur 9, aux bornes du réseau alternatif pour fournir sur ses bornes de sortie (ou pôles), respectivement constituées par les armatures positive 6 et négative 7 du condensateur 9, la tension du réseau redressée et filtrée.

Le collecteur du transistor de découpage 1 est réuni ici à la jonction de la cathode de la diode de découpage 2 et de l'une des armatures du condensateur d'accord 3 par l'intermédiaire de l'enroulement primaire 71 d'un transformateur de courant 70 (de manière analogue à celle décrite dans les publications FR-A-1 403 260 ou US-A-3 317 815). De cette manière, l'enroulement primaire 71 n'est parcouru d'un courant (linéairement croissant) que lorsque le transistor 1 est conducteur. L'enroulement secondaire 72 de ce transformateur de courant 70 est réuni par l'une des ses bornes, d'une part, au point du potentiel de référence 100 constitué par la jonction de l'émetteur du transistor 1, de l'anode de la diode 2, de l'autre armature du condensateur d'accord 3 et du pôle négatif 7 de la source 5, par l'intermédiaire d'une première résistance 24, dite de mesure et de protection, de relativement faible valeur, et d'autre part, directement à la cathode d'un thyristor 25. La gâchette 26 au point 100 de jonction de l'émetteur du transistor 1, de l'anode de la diode 2, de l'autre armature du condensateur d'accord 3 et du pôle négatif 7 de la source 5.

L'autre borne de l'enroulement secondaire 72 du transformateur de courant 70 est réunie ici, d'une part, par l'intermédiaire d'un premier montage parallèle 27 composé d'une troisième résistance et d'une bobine de choc, destiné à la protection contre des taux de montée de courant (di/dt) excessifs, à l'anode du thyristor 25 (ce montage 27 étant connu de la publication FR-A-2 345 762) et, d'autre part, par l'intermédiaire d'un second montage parallèle 28 composé d'un condensateur de couplage 29 et d'un montage série 80 de plusieurs (trois) diodes 81, 82 et 83, à la base du transistor de découpage 1. L'anode de la première diode 81 du montage 80 est reliée à la jonction de l'une des armatures du condensateur 29 avec l'autre borne de l'enroulement secondaire 72 et la cathode de la troisième diode 82 est reliée à la jonction de l'autre armature du condensateur 29 avec la base du transistor 1, de sorte qu'elles conduisent le courant de base dans le même sens que la jonction PN base-émetteur du transistor 1.

La base du transistor 1 est réunie, en outre, par l'intermédiaire d'une quatrième résistance 90 de forte valeur, de fonction semblable à celle de la résistance de démarrage 16 de la figure 1, au pôle positif 6 de la source 5 et, par l'intermédiaire d'une cinquième résistance 91, au point 100 de jonction de l'émetteur du transistor 1, de l'anode de la diode 2, de l'autre armature du condensateur 3 et du pôle négatif 7 de la source 5.

Les résistances 90 et 91 connectées en série entre les pôles 6, 7 de la source 5 et avec leur jonction à la base du transistor 1, forment également un diviseur résistif 92 pour la tension de polarisation de la base de celui-ci.

Lors de la mise sous tension du circuit de découpage 200, le montage redresseur 5 fournit entre ses bornes de sortie 6 et 7 une haute tension continue $V_9$ (d'environ 300 V) légèrement inférieure à la valeur de crête de la tension du réseau alternatif (de 220 $V_{eff}$, 50 Hz en Europe), la quatrième résistance 90 de polarisation de la base ou de démarrage permet de fournir à cette base un courant suffisant pour démarrer la conduction du transistor de découpage 1. La croissance de son courant collecteur qui parcourt l'enroulement primaire 71 du transformateur de courant 70 induit dans son enroulement secondaire 72 un courant dirigé vers la base à travers le second montage parallèle 28.

Ce courant induit dans l'enroulement secondaire 72 du transformateur 70 s'ajoute, en chargeant d'abord le condensateur de couplage 29, à travers la résistance 24, à la somme des chutes de tension directes des trois diodes 81 à 83 ($V_{FD} = 0,6$ V environ), au courant fourni à la base par la source 5 à travers la résistance 90, ce qui entraîne l'augmentation du courant-collecteur du transistor 1.

Cette augmentation du courant collecteur provoque celle du courant induit dans l'enroulement secondaire 72 qui, lorsque le condensateur 29 a été chargé à $3V_{FD}$ (1,8 volts environ), s'écoule à travers le montage 80 des trois diodes 81 à 83 en série dans la base. En même temps, grâce à l'effet cumulatif (régénératif) dû au transformateur 70, le transistor de découpage 1 est rapidement amené à la saturation de manière analogue à celle décrite dans les publications FR-A-1 403 260 ou US-A-3 318 815.

Pendant toute la durée de conduction du transistor 1, le condensateur 29 reste chargé à la tension $3V_{FD}$ et, pourvu que sa capacité soit choisie suffisamment grande pour qu'il ne soit pas déchargé notablement à travers les résistances 91 et 24 en série pendant les périodes de blocage du transistor 1, le second montage parallèle 28 peut être considéré comme une pile conservant sa tension de 1,8 volts environ.

Dès que le transistor de découpage 1 est saturé, il constitue un interrupteur fermé, réunissant l'inductance de découpage 60 en série avec l'enroulement primaire 71 du transformateur de courant 70 entre les pôles positif 6 et négatif 7 de la source de haute-tension 5, qui seront alors parcourus d'un courant linéairement croissant en fonction du temps, dû à la nature inductive de la charge 60.

Comme l'enroulement primaire 71 du transformateur de courant 70 est également parcouru par ce courant linéairement croissant et que de ce fait, la chute de tension entre ces bornes est une fraction constante de la tension d'alimentation continue $V_9$, le courant induit dans l'enroulement secondaire 72 alimentant la base du transistor 1 sera également sensiblement linéairement croissant à partir d'une valeur initiale servant à amener celui-ci à la saturation. Ce courant croissant provoquera aux bornes de la résistance de mesure 24 une différence de potentiel linéairement croissante qui équivaut à une tension linéairement décroissante (vers des valeurs négatives) par rapport au potentiel de référence $V_{100}$, à la jonction de la cathode du thyristor 25 avec l'enroulement secondaire 72. Comme la gâchette de ce thyristor 25 est réunie par la résistance 26 au point de référence 100, ceci a pour effet de rendre sa cathode de plus en plus négative par rapport à sa gâchette. Lorsque la tension gâchette-cathode $V_{GK}$ atteint le seuil de déclenchement du thyristor 25, celui-ci est amorcé et court-circuite temporairement, à travers le premier montage parallèle 27 de protection di/dt, l'enroulement secondaire 72 du transformateur de courant 70 pour supprimer l'alimentation en courant de la base du transistor 1.

L'amorçage du thyristor 25 réunit le pôle positif de la pile 28, constitué par la jonction de l'anode de la première diode 81 avec le condensateur 29, au point de référence 100 à travers la résistance 24 et le dipôle 27 en série, de sorte que la polarisation de la base reliée au pôle négatif de la pile 28, constitué par la jonction de la cathode de la troisième diode 83 avec le condensateur 29, devient négative pour accélérer l'évacuation des porteurs de charge minoritaires stockés dans la base (réduire le temps de stockage). Lorsque les charges stockées ont été évacuées (à la fin du temps de stockage), le transistor 1 se bloque et l'énergie emmagasinée dans l'inductance de découpage 60 ($1/2\ L_{60}I^2_{CMAX}$) s'écoule de manière oscillatoire à travers le condensateur d'accord 3 pendant un peu plus d'une demi-période du circuit résonnant que celui-ci constitue avec celle-là.

On notera ici que, lorsque l'interrupteur 4 ainsi commandé est unidirectionnel (sans diode antiparallèle 2) et lorsque le circuit de découpage 200 ne comporte pas de condensateur d'accord 3, l'énergie accumulée pendant la saturation du transistor 1 dans l'inductance de découpage 60 qui constitue l'enroulement primaire d'un transformateur d'alimentation, s'écoule à travers le ou les enroulements secondaires (non représentés) de celui-ci et la ou les diodes de redressement de chacun des montages redresseurs à une alternance qu'ils alimentent respectivement. Un tel dispositif d'alimentation par découpage est appelé du type «à accumulation» (ou «flyback» en anglais), comme ceux décrits dans les publications DE-B-21 60 659, 23 36 110 et 24 17 628 précitées, auquel le circuit de commande suivant la présente invention peut également être appliqué au prix de quelques adjonctions faisant partie de l'état de la technique (notamment l'application d'une tension de prépolarisation à la gâchette du thyristor 25 qui varie an fonction de la tension de sortie, à l'aide d'un circuit comparateur ou de régulation, pour obtenir une régulation par la variation de la durée de l'état saturé du transistor de découpage 1 comme dans la publication FR-A-2 345 762 de la demanderesse).

Lors du blocage entraînant l'annulation brutale du courant collecteur du transistor 1, la tension aux bornes des enroulements primaire 71 et secondaire 72 du transformateur 70 s'inverse de façon à bloquer d'abord le thyristor 25 et à appliquer simultanément à la base du transistor 1 une tension de polarisation négative engendrée par le courant inverse induit dans l'enroulement secondaire 72 par la coupure brutale du courant collecteur parcourant l'enroulement primaire 71. Ce courant inverse dans l'enroulement secondaire 72 se referme à travers la résistance 91 et la jonction base-émetteur en parallèle, le condensateur 29 du second montage parallèle (pile) 28 dont les diodes 80 se bloquent et la résistance de mesure 24, afin de restituer l'énergie emmagasinée dans l'inductance de cet enroulement primaire 71 par le courant collecteur avant le blocage du transistor 1. La tension de polarisation base-émetteur du transistor 1 correspondant alors à la chute de tension provoquée par le courant inverse aux bornes de la résistance 91 passe rapidement par une valeur nulle pour devenir ensuite négative et décroître en passant par une valeur minimale pour croître de nouveau jusqu'à la fin de la période de coupure de l'interrupteur de découpage 4, c'est-à-dire celle de l'intervalle d'oscillation du circuit résonnant composé de l'inductance 60 et du condensateur 3.

Dès que la tension à la jonction de cette inductance 60 avec le condensateur 3 devient légèrement négative, la diode 2 commence à conduire de sorte que l'interrupteur 4 redevient fermé. Comme le collecteur du transistor 1 est alors faiblement négatif par rapport à sa base, la diode constituée par la jonction base-collecteur de celui-ci conduira un faible courant de fuite à travers l'enroulement primaire 71 et la résistance 91 qui est en parallèle avec sa jonction base-émetteur. Cette dernière jonction est alors faiblement polarisée à l'envers et elle conserve cette polarisation négative jusqu'à l'annulation du courant dans la diode 2, qui croît linéairement à partir d'une valeur minimale (ou négative maximale) vers une valeur nulle.

On remarquera ici que la forte polarisation inverse de la jonction base-émetteur du transistor 1 pendant l'oscillation du circuit résonnant 60-3, permet de lui appliquer une tension (collecteur-émetteur) directe élevée $V_{CEX}$ (spécifiée dans les catalogues) et supérieure à $V_{CEO}$ (avec $V_{BE}=0$), sans risque de claquage («breakdown» en anglais).

Lorsque le courant dans la diode 2 devient nul, la faible tension négative à sa cathode s'annule également et le courant inverse dans le transistor 1 s'arrête de sorte que la résistance 90 de démarrage et de polarisation positive de sa base permet d'initier sa conduction qui l'amène de nouveau, grâce à l'effet cumulatif de réaction dû au transformateur de courant 70, décrit précédemment, rapidement à la saturation. Le transistor de découpage 1 saturé conduit alors de nouveau un courant collecteur linéairement croissant qui permet d'injecter dans sa base un courant analogue, permettant de la maintenir à l'état saturé jusqu'au déclenchement du thyristor 25 par la chute de tension aux bornes de la résistance de mesure 24 engendrée par le courant de base.

Sur les figures 3A à 3G, on a représenté des diagrammes des formes d'ondes de tensions et de courants en fonction du temps à divers endroits du circuit de la figure 2 permettant d'illustrer le fonctionnement de celui-ci.

Lorsque l'on applique au circuit de découpage 200 la haute-tension continue d'alimentation $V_9$ existant entre les bornes 6 et 7 de la source 5 à l'aide d'un interrupteur (non-représenté) inséré entre le pôle 6 et le point commun de la résistance 90 et de l'inductance 60, à l'instant $t_o$, le courant de base $I_{B1}$ traversant la résistance 90 débloque le transistor 1 dont le courant collecteur $I_{C1}$ qui traverse l'enroulement primaire 71 du transformateur de courant 70, induit dans l'enroulement secondaire 72 de celui-ci un courant qui, après avoir chargé le condensateur 29 de la pile 28 à 1,8 V, s'ajoute au courant de base initial $I_{B1}(t_o)$ pour provoquer par l'effet régénératif (cumulatif) susmentionné, la saturation quasi-instantanée du transistor 1. La tension d'alimentation $V_9$ est alors entièrement appliquée entre les bornes du montage inductif composé de l'inductance 60 et de l'enroulement primaire 71 en série, car la tension collecteur-émetteur $V_{CE1}$ du transistor 1 saturé ($V_{CEsat1}=0,6\,V$) est proche de zéro. Dès cet instant $t_o$, l'inductance 60, l'enroulement primaire 71 et le trajet collecteur-émetteur du transistor 1 est parcouru en série par un courant

$$I_{C1}(t) = \frac{V_9}{L_{60}+L_{71}} \cdot t$$ linéairement croissant, le courant $I_{60}$ dans l'inductance 60 étant illustré par la figure 3B et le courant collecteur $I_{C1}$ par la figure 3C.

Sur la figure 3D, on a représenté le courant de base $I_{B1}$ du transistor 1 qui lui est fourni par l'enroulement secondaire 72 en parcourant les diodes 80 en série, la jonction base-émetteur de celui-ci en parallèle avec la résistance 91 et la résistance de mesure 24, aux bornes de laquelle il provoque une chute de tension $V_{24}$ illustré sur la figure 3G, qui est appliquée à la cathode du thyristor 25 avec une polarité négative par rapport au potentiel de référence $V_{100}$ appliqué à sa gâchette.

Comme le courant induit dans l'enroulement secondaire 72 par le courant collecteur linéairement croissant qui parcourt l'enroulement primaire 71 est également sensiblement de la même forme, la chute de tension $V_{24}$ de la figure 3G décroît linéairement jusqu'à ce qu'elle atteigne la tension gâchette-cathode de seuil de déclenchement $V_{GT25}$ du thyristor 25 à l'instant $t_1$.

Lorsque le thyristor 25 est amorcé, il court-circuite l'enroulement secondaire 72 et provoque l'application de la tension négative de la pile 28 à la base du transistor 1, qui entraîne l'évacuation des charges stockées dans celle-ci. Cette évacuation est représenté sur la figure 3D comme un courant de base $I_{B1}$ négatif et décroissant entre les instants $t_1$ et $t_2$ dont l'intervalle représente le temps de stockage $T_S$. Le courant d'évacuation provoque aux bornes de la résistance de mesure 24 une impulsion $V_{24}$ positive représentée sur la figure 3G qui s'ajoute à la tension négative $V_{28}$ de la pile 28 avec une polarité opposée. Pendant l'état saturée du transistor 1, entre les instants $t_o$ et $t_1$, cette tension base-émetteur $V_{BE1}$ du transistor 1, représentée sur la figure 3E, est d'une valeur positive de 0,7 volts environ ($V_{BEsat}$). A l'instant $t_1$, elle diminue légèrement en restant faiblement positive jusqu'à l'instant $t_2$ de la fin du temps de stockage $T_S$. Ceci résulte du fait che la variation de la chute de tension aux bornes de la résistance 24, $V_{24}$ représentée sur la figure 3G, s'ajoute à la tension négative de la pile 28, à la tension base-émetteur $V_{BE1}$ du transistor 1 et à la tension de déchet du thyristor 25 amorcé, la somme algébrique de ces tensions étant présente aux bornes du dipôle 27.

A l'instant $t_2$, le transistor 1 se bloque, son courant collecteur $I_{C1}$ chute à zéro en provoquant une inversion de la tension aux bornes des enroulements primaire 71 et secondaire 72 du transformateur de courant 70. Cette inversion de tension aux bornes de l'enroulement secondaire 72 provoque simultanément le blocage du thyristor 25 et l'application d'une tension négative décroissante à la base du transistor 1 ($V_{BE1}$ de la figure 3E). En effet, l'énergie accumulée dans le transformateur de courant 70 sous la forme d'un flux magnétique provoqué par le courant collecteur $I_{C1}(t_2)$ parcourant son enroulement primaire 71, doit être restituée par l'enroulement secondaire 72 aux bornes duquel une tension $V_{72}$ décroissant vers

des valeurs négatives, représentée sur la figure 3F, apparaît à l'instant $t_2$. La forme de la courbe de décroissance de la tension $V_{72}$ pendant l'ouverture de l'interrupteur 4 entre les instants $t_2$ et $t_5$ est déterminée par la valeur de l'inductance de l'enroulement secondaire 72 du transformateur de courant 70 et par l'impédance de la jonction base-émetteur du transistor 1, qui est alors polarisée à l'envers et dont la composante capacitive prédominante forme avec cette inductance $L_{72}$ (dont la valeur est de l'ordre de quelques millihenry), un circuit résonnant parallèle, amorti notamment par la résistance 91 du diviseur de polarisation 92. Le choix de la valeur de cette résistance 91 permet de modifier, de ce fait, la forme d'onde de la tension négative appliquée, dans l'intervalle entre les instants $t_2$ et $t_5$, à la jonction base-émetteur de transistor 1, notamment en ce qui concerne son amplitude crête qui doit être inférieure au seuil de claquage de Zener (avalanche) de cette jonction.

Lorsque le transistor 1 se bloque à l'instant $t_2$, l'énergie emmagasinée sous forme de courant $I_{60}(t_2)$ dans l'inductance de découpage 60 s'écoule de manière oscillatoire à travers le condensateur d'accord 3. Entre les instants $t_2$ et $t_3$, le courant $I_{60}$ dans l'inductance 60 représenté sur la figure 3B et la tension $V_3$ (ou $V_{CE1}$) aux bornes du condensateur 3 (ou collecteur-émetteur du transistor 1) croissent jusqu'à ce que cette dernière, partie de zéro, atteigne, à l'instant $t_3$, la valeur de la tension d'alimentation $V_9$ du circuit de découpage 200. Le courant $I_{60}$ atteint alors sa valeur maximale positive $I_{60}$ ($t_3$). Entre les instants $t_3$ et $t_4$, la tension $V_3$ (figure 3A) est en forme de demi-sinusoïde positive et le courant $I_{60}$ en forme demi-cosinusoïde atteignant sa valeur minimale à l'instant $t_4$, lorsque la tension $V_3$ est de nouveau égale à la tension d'alimentation $V_9$.

Entre les instants $t_4$ et $t_5$, le courant $I_{60}$ ayant passé par un minimum commence à croître et la tension $V_3$ qui est également la tension collecteur-émetteur $V_{CE1}$ du transistor 1 et la tension cathode-anode $V_{KA2}$ de la diode 2, continue à décroître jusqu'à une valeur légèrement négative ($-0,7$ volts environ) qui rend la diode 2 conductrice de façon à refermer l'interrupteur bidirectionnel 4.

A l'instant $t_5$ de la fermeture de l'interrupteur 4, la diode 2 reprend le courant $I_{60}$ ($t_5$) dans l'inductance 60 qui devient alors linéairement croissant jusqu'à son annulation à l'instant $t_6$. Simultanément, la tension de base $V_{BE1}$ de la figure 3E saute à une faible valeur négative produite par un faible courant inverse engendré par la tension directe ($V_{FD}$ de 0,7 V) de la diode 2 qui est en parallèle avec la jonction collecteur-base du transistor 1 connectée en série avec la résistance 91. Entre les instants $t_5$ et $t_6$, la tension $V_{72}$ aux bornes de l'enroulement secondaire 72, représentée sur la figure 3F, est légèrement positive, mais elle reste inférieure à la tension négative de la pile 28, de sorte que la tension base-émetteur $V_{BE1}$ du transistor 1 reste constante et légèrement négative.

A l'instant $t_6$, le courant dans la diode 2 et la tension directe à ses bornes $V_3$ deviennent nuls, ce qui annule également la polarisation négative de la base du transistor 1 de sorte que le pôle positif 6 de la source 5 peut lui fournir un courant de base $I_{B1}$ ($t_6$) initiant sa conduction pour qu'il puisse être ramené à la saturation par l'effet cumulatif dû à la réaction par le transformateur de courant 70.

Le circuit de commande suivant l'invention peut être utilisé dans un dispositif d'alimentation par découpage ou convertisseur statique continu-continu ou continu-alternatif, de type auto-oscillant, régulé par le rapport cyclique ou auto-alimenté et, éventuellement, combiné avec l'étage de sortie de balayage-ligne qu'il alimente et régulé par le déphasage. Dans le dernier cas, le convertisseur est, de préférence, auto-oscillant au démarrage. Pour ce faire, il faut appliquer à la gâchette du thyristor soit une tension de régulation continue, fonction de celle fournie par le dispositif, soit des impulsions de déclenchement provenant d'un générateur de retard variable (50 de la figure 1).

Afin d'illustrer un exemple de réalisation du circuit de commande de la base d'un transistor de commutation de la figure 2, suivant l'invention, les valeurs de quelques uns des éléments essentiels sont les suivants:

— la résistance de mesure et de protection 24 est de 1,5 ohms,

— la résistance de gâchette 26 est de 1 kiloohm,

— la quatrième résistance 90 est de 47 kiloohms,

— la cinquième résistance 91 est de 1 kiloohm,

— le condensateur 29 de la pile 28 est de 1 microfarad,

— la résistance du dipôle 27 est de 10 ohms, et

— l'inductance de l'enroulement secondaire 72 est de 2 millihenry.

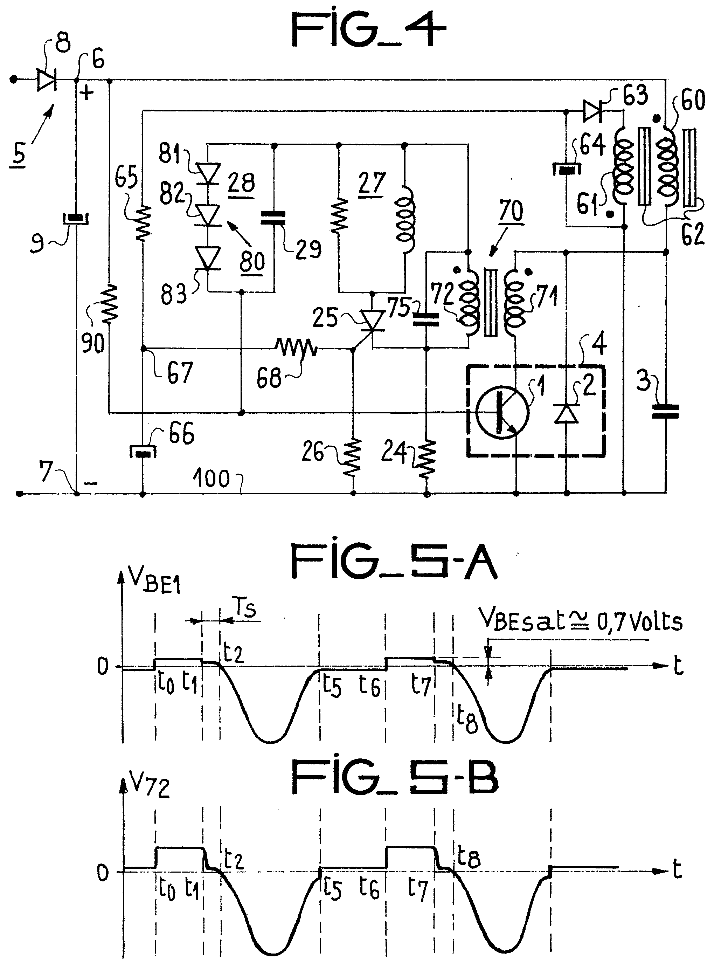

La figure 4 est un schéma de principe du mode de réalisation préféré du circuit de commande auto-oscillant de la base d'un transistor de commutation de puissance dans un convertisseur statique continu-continu ou continu-alternatif, conforme à la présente invention.

Sur la figure 4, les éléments analogues à ceux de la figure 2 ont été respectivement désignés par les mêmes symboles.

Le premier perfectionnement du circuit de la figure 4 par rapport à celui de la figure 2, consiste à connecter un troisième condensateur 75 aux bornes de l'enroulement secondaire 72 du transformateur de courant 70. Ce troisième condensateur 75 dont la capacité est choisie en fonction de l'inductance $L_{72}$ de cet enroulement secondaire 72, permet d'accorder le circuit résonnant parallèle qu'ils forment ensemble sur une fréquence sensiblement indépendante de l'impédance de la jonction base-émetteur du transistor 1, lorsqu'elle est polarisée à l'envers, qui présente une dispersion importante.

En effet, la présence de ce troisième condensateur 75 permet d'éviter les principaux défauts du circuit de la figure 2, qui sont les suivants:

—a) intervention de la composante capacitive de relativement faible valeur de l'impédance de la jonction base-émetteur du transistor de découpage 1 dans la résonance du circuit résonnant parallèle qu'elle forme avec l'inductance de l'enroulement secondaire 72, qui doit de ce fait présenter une valeur (nombre de tours) élevée; cette intervention impliquant la nécessité de la sélection du transistor 1, lors de son remplacement, du fait de la forte dispersion de ses caractéristiques inverses; et

–b) la nécessité de la présence de la cinquième résistance 91 formant avec la quatrième résistance de démarrage 90 le diviseur de polarisation résistif 92 de la base, qui doit amortir le circuit résonnant susmentionné afin de limiter la valeur de crête de la tension de polarisation inverse de la jonction base-émetteur à une valeur inférieur à sa tension de Zener (avalanche). La cinquième résistance 91, dite d'amortissement, a de ce fait une valeur relativement faible (de 0,5 à 2 kiloohms, par exemple), ce qui impose le choix de la valeur de la quatrième résistance de démarrage 90 en fonction de la tension du réseau redressée, fournie par la source 5, car le diviseur 92 qui doit fournir à la base une tension supérieure à 0,7 volts, dissipe alors une puissance ($V_9^2/R_{90}$) non négligeable (2 watts environ) réduisant d'autant le rendement du circuit. Dans le circuit de la figure 4, la valeur de la résistance de polarisation ou de démarrage 90 peut être supérieure à 100 kiloohms (120 k$\Omega$).

L'adjonction de ce troisième condensateur 75 qui est connecté en parallèle avec l'enroulement secondaire 72 du transformateur de courant 70 permet donc, d'une part, de réduire le nombre de tours de cet enroulement 72 et, par conséquent, son inductance propre $L_{72}$ qui intervient dans l'oscillation (par exemple, de moitié) et, d'autre part, d'omettre la cinquième résistance 91 d'amortissement et, de ce fait, augmenter la valeur de la quatrième résistance 90 de démarrage de façon à augmenter le rendement du circuit de découpage 200, tout en conservant un rapport de transformation sensiblement identique.

La capacité $C_{75}$ de ce troisième condensateur 75 est choisie alors, de préférence, telle que la fréquence de résonance du circuit oscillant parallèle qu'il forme avec l'inductance $L_{72}$ de l'enroulement secondaire 72 soit sensiblement égale, inférieure ou légèrement supérieure à celle du circuit oscillant constitué par l'inductance de découpage 60 et le condensateur d'accord 3, lorsque l'interrupteur de découpage 4 est ouvert.

Les figures 5A et 5B illustrent respectivement les formes d'onde des tensions $V_{BE1}$ base-émetteur du transistor 1 et $V_{72}$ aux bornes de l'enroulement secondaire 72 pour le circuit de la figure 4 de manière analogue à celle des figures 3E et 3F en ce qui concerne le circuit de la figure 2, dont les différences sont dûes à l'adjonction du troisième condensateur 75.

Seul l'intervalle de l'ouverture $t_5$–$t_2$ de l'interrupteur 4, à partir de l'instant $t_2$ de blocage du transistor 1 jusqu'à l'instant $t_5$ de reprise de conduction de la diode 2, présente quelques différences.

Lorsque, à l'instant $t_2$, le transistor 1 se bloque par l'annulation brusque de son courant collecteur $I_{C1}$ (voir figure 3C), les bornes de l'enroulement primaire 71 du transformateur de courant 70 sont en circuit ouvert de façon à entraîner une inversion de la tension également aux bornes de l'enroulement secondaire 72. L'énergie accumulée sous la forme d'un flux magnétique dans le circuit magnétique (noyau) du transformateur 70 par le courant collecteur maximal $I_{C1}$ ($t_2$), est alors restituée par l'enroulement secondaire 72 qui la transmet au condensateur 75 en le chargeant de manière oscillatoire. Cet échange d'énergie donne alors naissance aux bornes du circuit résonnant parallèle $L_{72}$–$C_{75}$ qu'ils forment ensemble, à une tension négative appliquée à la base dont la forme quasi-sinusoïdale est fonction de sa fréquence de résonance.

La période d'oscillation du circuit résonnant $L_{72}$–$C_{75}$ (où $L_{72}$ est 1,14 mH et $C_{75}$ de 47 nF, par exemple), représentée sur les figures 5A et 5B, est légèrement inférieure au double de la durée de l'intervalle de l'ouverture de l'interrupteur 4, déterminée ici par la période de résonance du circuit oscillant formé par l'inductance de découpage 60 et le condensateur d'accord 3.

Lorsque le circuit de la figure 4 est utilisé dans le convertisseur statique dans lequel la durée de l'intervalle de l'ouverture n'est pas constante et déterminée par la résonance de l'inducteur de découpage 60 avec un condensateur, l'inductance $L_{72}$ de l'enroulement secondaire 72 et la capacité $C_{75}$ du condensateur 75 qui lui est parallèle, sont choisies de telle sorte que la période de leur oscillation soit au moins légèrement supérieure à la durée d'ouverture maximale.

L'expérience a montré que dans un circuit de commande du type décrit, la durée de conduction du transistor de commutation 1 qui détermine l'énergie emmagasinée, dépendait notamment du seuil d'amorçage du thyristor 25 dont la dispersion est importante. Par ailleurs, cette durée dépend également de la pente de croissance du courant collecteur de ce transistor 1, qui est proportionnelle à la valeur de la tension du réseau redressée et filtrée $V_9$ alimentant le circuit de découpage 200. Lorsque le circuit est auto-oscillant, sa fréquence de répétition fluctue, par conséquent, avec la tension d'alimentation continue $V_9$ entre les bornes 6 et 7 de la source 5.

Dans l'une des applications du convertisseur mentionnée précédemment, il est prévu de le synchroniser avec un autre oscillateur, tel que l'oscillateur horizontal d'un récepteur de télévision, à l'aide d'impulsions récurrentes appliquées à la gâchette du thyristor 25. Dans un tel cas, la fluctuation de la fréquence de fonctionnement autonome du circuit en fonction de la tension du réseau peut rendre la synchronisation malaisée.

Le second perfectionnement du circuit de la figure 4 par rapport à celui de la figure 2, consiste à appliquer à la gâchette du thyristor 25 une tension de prépolarisation négative qui varie en fonction de la tension d'alimentation $V_9$ proportionnelle à celle du réseau, en vue de rendre plus stable la fréquence de fonctionnement autonome de ce circuit.

Un enroulement secondaire 61 est bobiné sur le noyau 62 qui porte l'inductance de découpage 60 de façon à obtenir aux bornes de cet enroulement 61 une tension négative proportionnelle à la tension $V_9$, pendant la conduction du transistor 1. L'une des bornes de cet enroulement 61 est reliée à la cathode d'une diode de redressement 63 dont l'anode est reliée à l'une des bornes d'un condensateur de filtrage 64. Les autres bornes respectives de l'enroulement 62 et du condensateur 64 sont reliées ensemble au point du potentiel de référence 100. Le point commun de l'anode de la diode 63 et du condensateur de filtrage 64 (de quelques microfarads) est réuni, par l'intermédiaire d'une résistance 65 (de quelques kiloohms) et d'un autre condensateur de filtrage 66 (de quelques dizaines de microfarad) en série, au point de référence 100. Les condensateurs 64 et 66 forment avec la résistance 65 une cellule de filtrage RC en forme de $\pi$. La sortie 67 de cette cellule de filtrage, constituée par la jonction de la résistance 65 avec l'autre condensateur 66, est réunie à la gâchette du thyristor 25 à travers une résistance 68 (d'une dizaine de kiloohms).

Grâce à ce montage redresseur 63, 64 suivi d'une cellule de filtrage 64, 65, 66, la tension de polarisation négative de la gâchette du thyristor 23 varie proportionnellement à la tension du réseau redressée $V_9$. Une faible augmentation de la valeur de la résistance de mesure 24 (par exemple, à 2,7 ohms) permettra alors au circuit de conserve sa fréquence de fonctionnement autonome pour une tension du réseau nominale.

Lorsque la tension d'alimentation $V_9$ augmente, la pente de croissance du courant collecteur $I_{C1}$ du transistor 1 et, par conséquent, la fréquence de fonctionnement autonome a tendance à augmenter également. Ceci est toutefois contrecarré par la polarisation négative croissante de la gâchette du thyristor 25 qui s'ajoute au seuil d'amorçage $V_{GT25}$ précité, dont l'effet est de prolonger la période de conduction du transistor 1, c'est-à-dire de diminuer la fréquence. Lorsque, par contre, la tension d'alimentation $V_9$ diminue, elle entraîne une diminution consécutive de la pente de croissance du courant collecteur ainsi que de la polarisation négative de la gâchette qui ont également des effets contraires sur la fréquence de fonctionnement autonome du circuit. Le circuit de polarisation de gâchette décrit ci-dessus permet également de rendre le circuit moins sensible à la dispersion du seuil d'amorçage des thyristors 25.

L'expérience a montré que sans la polarisation variable de la gâchette, une variation de 30% de la tension du réseau entraîne une variation d'environ 17% de la fréquence dans l'un ou dans l'autre sens, tandis qu'avec un circuit de polarisation variable de la gâchette tel que représenté sur la figure 4, la variation de fréquence correspondante n'est que de 4 à 5%.

Le circuit de commande suivant l'invention conserve les avantages du dispositif auto-alimenté de la figure 1 qui est auto-oscillant au démarrage, c'est-à-dire la limitation du courant crête du transistor de découpage, tout en réduisant les pertes ohmiques du circuit de découpage par le transfert de la résistance de mesure et de protection permettant d'obtenir cette limitation, du circuit émetteur dans le circuit de base, c'est-à-dire dans celui de l'enroulement secondaire 72 du transformateur de courant 70 dont une application analogue mais sans limitation de courant a été mentionnée notamment dans la publication FR-A-1 403 260.

Il est à remarquer ici que le circuit de commande suivant l'invention, notamment celui conforme à la figure 4, où la forme de l'impulsion négative fournie par l'enroulement secondaire 72 du transformateur de courant 70 pendant l'intervalle de blocage (représentée de t2 à t5 sur la figure 5B) de l'interrupteur de découpage 4 peut être modifiée par le choix de la capacité $C_{75}$ du condensateur 75 formant alors avec l'inductance $L_{72}$ de cet enroulement 72 un circuit résonnant parallèle, est particulièrement adapté pour commander un thyristor à blocage par la gâchette (appelé «gate turn-off thyristor» ou «gate-controlled switch» dans la littérature anglo-américaine) qui peut remplacer le transistor de commutation de puissance 1 dans le circuit convertisseur illustré. Ce type de thyristor blocable par sa gâchette est un dispositif connu à quatre couches PNPN superposées et à trois jonctions, dont le courant anodique qui parcourt l'enroulement primaire 71 du transformateur de courant 70, peut, contrairement aux thyristors classiques, être bloqué par une polarisation inverse de sa jonction gâchette-cathode du fait de la configuration (structure) particulière (distribuée) de cette gâchette. Comme il présente une intensité limite du courant anodique au-delà duquel son blocage par la gâchette ne peut plus être effectué, la valeur de l'inductance de commutation 60 doit être choisie en conséquence. La puissance nécessaire à la commande du blocage par la gâchette peut alors être obtenue par le choix judicieux de l'inductance $L_{71}$ de l'enroulement primaire 71 du transformateur de courant 70 qui emmagasine l'énergie fournie par le courant anodique du thyristor blocable au cours de chacune de ses périodes de conduction. L'anode du thyristor est alors connectée à la place du collecteur du transistor 1, sa cathode à la place de l'émetteur et sa gâchette à la place de la base de celui-ci.

**Revendications**

1. Circuit de commande d'un transistor de commutation de puissance (1) dans un convertisseur continu-continu ou continu-alternatif comprenant, connectée en série avec le trajet collecteur-émetteur de ce transistor (1), entre les pôles (6, 7) d'une source (5) de tension continue d'alimentation ($V_9$), une inductance de découpage (60) emmagasinant l'énergie électrique fournie par la source (5) pendant la conduction du transistor (1) dont l'émetteur relié à l'un (7) des pôles (6, 7) de la source (5), constitue un point de potentiel de référence (100), le circuit de commande comportant un transformateur de courant (70) dont l'enroulement primaire (71) est inséré entre le collecteur du transistor (1) et l'inductance (60) et dont l'enroulement secondaire (72) est couplé entre l'émetteur et la base du transistor (1) de façon à fournir à cette dernière un courant qui varie sensiblement proportionnelement à son courant collecteur pour l'amener et le maintenir en saturation, un thyristor (25) réuni entre les bornes de l'enroulement secondaire (72) de manière à commander le blocage du transistor (1) en court-circuitant cet enroulement (72) lorsque le thyristor (25) est amorcé, et une résistance de polarisation de la base (90) du transistor (1) réunissant celle-ci au même pôle (6) de la source (5) que celui réuni à son collecteur, caractérisé en ce que la jonction du l'une des bornes de l'enroulement secondaire (72) avec la cathode du thyristor (25) est réunie au moyen d'une résistance de mesure et de protection (24) à l'émetteur du transistor (1) qui est également réuni, par l'intermédiaire d'une résistance de gâchette (26), à la gâchette du thyristor (25), afin de commander le déclenchement de ce dernier, lorsque la chute de tension ($V_{24}$) engendrée par le courant de base ($I_{B1}$) du transistor (1) aux bornes de la résistance de mesure de protection (24) atteint le seuil d'amorçage ($V_{Gt}$) du thyristor (25).

2. Circuit de commande suivant la revendication 1, caractérisé en ce que l'autre borne de l'enroulement secondaire (72) du transformateur de courant (70) est réunie à la base du transistor (1) par l'intermédiaire d'un montage (28) composé de plusieurs diodes (80) en série avec un condensateur (29) connecté en parallèle, qui se charge à la somme des tensions directes ($V_{FD}$) des diodes (81 à 83) au début de chaque mise en conduction du transistor (1).

3. Circuit de commande suivant l'une des revendications précédentes, caractérisé en ce qu'il comporte, en outre, un autre condensateur (75) connecté en parallèle avec l'enroulement secondaire (72) du transformateur de courant (70) afin de former avec l'inductance ($L_{72}$) de celui-ci un circuit résonnant dont la période de résonance est supérieure à la durée maximale de l'intervalle de coupure de l'interrupteur électronique comprenant le transistor (1).

4. Circuit de commande suivant l'une des revendications 1 et 2, caractérisé en ce qu'il comporte, en outre, une autre résistance (91) connectée entre la base et l'émetteur du transistor (1) et formant avec la résistance de polarisation (90) de cette base un diviseur de tension résistif (92), la valeur de cette autre résistance (91), destinée à amortir les oscillations d'un circuit résonnant formé par l'inductance de l'enroulement secondaire (72) et par la composante capacitive de l'impédance de la jonction base-émetteur polarisée à l'envers, étant choisie de manière à rendre l'amplitude crête négative de la tension base-émetteur inférieure au seuil de claquage de Zener de cette jonction.

5. Circuit de commande suivant l'une des revendications précédentes, caractérisé en ce qu'il comporte, en outre, un circuit de polarisation négative variable de la gâchette du thyristor (25) en fonction de la tension d'alimentation ($V_9$) fournie par la source (5).

6. Circuit de commande suivant la revendication 5, caractérisé en ce que le circuit de polarisation variable de la gâchette comporte un enroulement (61) magnétiquement couplé à l'inductance de découpage (60) et alimentant en cascade un redresseur de crêtes négatives (63, 64) et une cellule de filtrage (65, 66) dont la sortie (67) est réunie, par l'intermédiaire, d'une résistance (68) formant avec la résistance de gâchette (26) un diviseur de tension résistif, à la gâchette du thyristor (25).

7. Circuit de commande suivant l'une des revendications 3, 5 et 6, caractérisé en ce que le transistor de commutation de puissance (1) y est remplacé par un thyristor à blocage par la gâchette de telle sorte que l'enroulement primaire (71) du transformateur de courant (70) est relié à l'anode de celui-ci et que l'enroulement secondaire (72) de ce transformateur (70) est couplé entre sa gâchette et sa cathode.

8. Convertisseur statique continu-continu ou continu-alternatif, du type dans lequel l'interrupteur de découpage (4) comprenant un transistor de commutation de puissance (1) est connecté en série avec une inductance de découpage (60) comprenant l'enroulement primaire d'un transformateur d'alimentation, entre les pôles (6, 7) d'une source de tension continue d'alimentation (5), caractérisé en ce qu'il comporte un circuit de commande de la base de ce transistor (1) suivant l'une des revendications 1 à 6 ou de la gâchette du thyristor suivant la revendication 7.

9. Convertisseur statique suivant la revendication 8, du type dans lequel l'interrupteur de découpage (4) est du type à conduction bidirectionnelle et à commande unidirectionnelle, qui comprend une diode (2) connectée en parallèle avec le trajet collecteur-émetteur du transistor (1) pour conduire dans la direction opposée, caractérisé en ce que la cathode de la diode (2) est reliée à la jonction de l'enroulement primaire (71) du transformateur de courant (70) avec l'inductance de découpage (60).

10. Convertisseur statique suivant l'une des revendications 8 et 9, du type dans lequel le circuit de découpage (200) comporte un condensateur d'accord (3) formant avec l'inductance de découpage (60) un circuit résonnant pendant l'ouverture de l'interrupteur (4), caractérisé en ce que l'une des armatures du condensateur d'accord (3) est reliée à la jonction de l'enroulement primaire (71) du transformateur de courant (70) avec l'inductance de découpage (60).

**Patentansprüche**

1. Steuerschaltung für einen Leistungsschalttransistor (1) in einem Gleichstrom-Gleichstrom- oder Gleich-Wechselstrom-Wandler, mit, in Reihe mit der Kollektor-Emitter-Strecke dieses Transistors (1) zwischen die Pole (6, 7) einer Quelle (5) einer Versorgungsgleichspannung ($V_9$) geschaltet, einer Zerhackerinduktivität (60), welche die elektrische Energie speichert, die von der Quelle (5) während der Leitung des Transistors (1) geliefert wird, dessen mit einem (7) der Pole (6, 7) der Quelle (5) verbundener Emitter einen Bezugspotentialpunkt (100) bildet, wobei die Steuerschaltung einen Stromtransformator (70) umfasst, dessen Primärwicklung (71) zwischen den Kollektor des Transistors (1) und die Induktivität (60) eingefügt ist und dessen Sekundärwicklung (72) zwischen Emitter und Basis des Transistors (1) so geschaltet ist, dass dieser ein Strom zugeführt wird, der im wesentlichen proportional mit seinem Kollektorstrom variiert, um ihn in Sättigung zu bringen und zu halten, mit einem Thyristor (25) der zwischen die Anschlüsse der Sekundärwicklung (72) so geschaltet ist, dass er die Sperrung des Transistors (1) steuert, indem er diese Wicklung (72) kurzschliesst, wenn der Thyristor (25) gezündet ist, und mit einem Widerstand (90) zur Polarisation der Basis des Transistors (1) und Verbindung letzterer mit demselben Pol (6) der Quelle (5), der auch mit seinem Kollektor verbunden ist, dadurch gekennzeichnet, dass die Verbindung eines der Anschlüsse der Sekundärwicklung (72) mit der Kathode des Thyristors (25) über einen Mess- und Schutzwiderstand (24) mit dem Emitter des Transistors (1) verbunden ist, der ferner über einen Auslösewiderstand (26) mit dem Gate des Thyristors (25) verbunden ist, um die Zündung desselben zu steuern, wenn der Spannungsabfall $(V_{24})$, der durch den Basisstrom $(I_{B1})$ des Transistors (1) an den Anschlüssen des Mess- und Schutzwiderstandes (24) erzeugt wird, die Zündschwelle $(V_{GT})$ des Thyristors (25) erreicht.

2. Steuerschaltung nach Anspruch 1, dadurch gekennzeichnet, dass der andere Anschluss der Sekundärwicklung (72) des Stromtransformators (70) mit der Basis des Transistors (1) über eine Schaltungsanordnung (28) verbunden ist, die aus mehreren in Reihe geschalteten Dioden (80) und einem parallel geschalteten Kondensator (29) zusammengesetzt ist, welcher sich auf die Summe der Durchlassspannungen $(V_{FD})$ der Dioden (80 bis 83) zu Beginn einer jeden Leitendsteuerung des Transistors (1) auflädt.

3. Steuerschaltung nach einem der vorstehenden Ansprüche, dadurch gekennzeichnet, dass sie ferner einen weiteren Kondensator (75) enthält, der parallel zu der Sekundärwicklung (72) des Stromtransformators (70) geschaltet ist, um mit der Induktivität $(L_{72})$ desselben einen Resonanzkreis zu bilden, dessen Resonanzperiode grösser als die maximale Dauer des Abschaltintervalls des den Transistor (1) enthaltenden elektronischen Unterbrechers ist.

4. Steuerschaltung nach einem der Ansprüche 1 und 2, dadurch gekennzeichnet, dass sie ferner einen weiteren Widerstand (91) enthält, der zwischen die Basis und den Emitter des Transistors (1) geschaltet ist und mit dem Polarisationswiderstand (90) dieser Basis einen resistiven Spannungsteiler (92) bildet, wobei der Wert dieses weiteren Widerstandes (91), der zur Dämpfung der Schwingungen eines Resonanzkreises bestimmt ist, welcher durch die Induktivität der Sekundärwicklung (72) und die kapazitive Komponente der Impedanz des in Sperrichtung gepolten Basis-Emitter-Überganges gebildet ist, so gewählt ist, dass die negative Scheitelamplitude der Basis-Emitter-Spannung kleiner als der Schwellwert der Zener-Durchbruchsspannung dieses Überganges gemacht wird.

5. Steuerschaltung nach einem der vorstehenden Ansprüche, dadurch gekennzeichnet, dass sie ferner eine Schaltung zur variablen negativen Polarisierung des Gates des Thyristors (25) in Abhängigkeit von der durch die Quelle (5) gelieferten Versorgungsspannung $(V_9)$ umfasst.

6. Steuerschaltung nach Anspruch 5, dadurch gekennzeichnet, dass die Schaltung zur variablen Polarisation des Gates eine Wicklung (61) umfasst, die magnetisch mit der Zerhackerinduktivität (60) gekoppelt ist und in Kaskadenschaltung einen Negativ-Spitzenwertgleichrichter (63, 64) und ein Filterelement (65, 66) speist, dessen Ausgang (67) über einen Widerstand (68), der mit dem Gate-Widerstand (26) einen resistiven Spannungsteiler bildet, mit dem Gate des Thyristors (25) verbunden ist.

7. Steuerschaltung nach einem der Ansprüche 3, 5 und 6, dadurch gekennzeichnet, dass der Leistungsschalttransistor (1) durch einen über das Gate sperrbaren Thyristor derart ersetzt ist, dass die Primärwicklung (71) des Stromtransformators (70) mit der Anode desselben verbunden ist und die Sekundärwicklung (72) dieses Transformators (70) zwischen sein Gate und seine Anode geschaltet ist.

8. Statischer Gleichstrom-Gleichstrom- oder Gleichstrom-Wechselstrom-Wandler derjenigen Art, bei welcher der einen Leistungsschalttransistor (1) enthaltende Zerhackerunterbrecher (4) in Reihe mit einer Zerhackerinduktivität (60) geschaltet ist, welche die Primärwicklung eines Versorgungstransformators zwischen den Polen (6, 7) einer Versorgungsgleichspannungsquelle (5) enthält, dadurch gekennzeichnet, dass er eine Steuerschaltung zur Steuerung der Basis dieses Transistors (1) nach einem der Ansprüche 1 bis 6 oder des Gates des Thyristors nach Anspruch 7 enthält.

9. Statischer Wandler nach Anspruch 8, von derjenigen Art, bei welcher der Zerhackerunterbrecher (4) vom Typ mit bidirektionaler Leitung und eindirektionaler Steuerung ist, und welcher eine Diode (2) enthält, die parallel mit der Kollektor-Emitter-Strecke des Transistors (1) geschaltet ist, um in der entgegengesetzten Richtung zu leiten, dadurch gekennzeichnet, dass die Kathode der Diode (2) mit der Verbindung der Primärwicklung (71) des Stromtransformators (70) mit der Zerhackerinduktivität (60) verbunden ist.

10. Statischer Wandler nach Anspruch 8 oder 9, von derjenigen Art, bei welcher die Zerhackerschaltung (200) einen Abstimmkondensator (3) enthält, der mit der Zerhackerinduktivität (60) einen Resonanzkreis während des geöffneten Zustandes des Unterbrechers (4) bildet, dadurch gekennzeichnet, dass einer der Beläge des Abstimmkondensators (3) mit der Verbindung der Primärwicklung (71) des Stromtransformators (70) mit der Zerhackerinduktivität (60) verbunden ist.

**Claims**

1. Control circuit for controlling a power switching transistor (1) in a direct-direct or direct-a.c. converter comprising, connected in series with the collector-emitter path of said transistor (1) between the poles (6, 7) of a source (5) of a d.c. supply voltage ($V_9$), a chopper inductor (60) storing the electrical energy furnished by the source (5) during the conduction of the transistor (1), whose emitter connected to one (7) of the poles (6, 7) of the source (5) constitutes a reference potential source (100), the control circuit comprising a current transformer (70) whose primary winding (71) is inserted between the collector of the transistor (1) and the inductor (60) and whose secondary winding (72) is coupled between the emitter and the base of the transistor (1) so as to supply to the latter a current which varies substantially proportionally to its collector current to bring it and maintain it in saturation, a thyristor (25) connected between the terminals of the secondary winding (72) so as to control the blocking of the transistor (1) by short-circuiting said winding (72) when the thyristor (25) is triggered, and a resistor (90) for biasing the base (90) of the transistor (1) connecting the latter to the same pole (6) of the source (5) as that connected to its collector, characterized in that the connection point of one of the terminals of the secondary winding (72) to the cathode of the thyristor (25) is connected by means of a measuring and protection resistor (24) to the emitter of the transistor (1) which is also connected by way of a gate resistor (26) to the gate of the thyristor (25) in order to trigger the latter when the voltage drop ($V_{24}$) generated by the base current ($I_{B1}$) of the transistor (1) at the terminals of the measuring and protection resistor (24) reaches the triggering threshold ($V_{GT}$) of the thyristor (25).

2. Control circuit according to claim 1, characterized in that the other terminal of the secondary winding (72) of the current transformer (70) is connected to the base of the transistor (1) by way of a circuit (28) made up of a plurality of series-connected diodes (80) and a parallel-connected capacitor (29) which is charged to the sum of the forward voltage ($V_{FD}$) of the diodes (80 to 83) at the start of each rendering conductive of the transistor (1).

3. Control circuit according to one of the preceding claims, characterized in that it further comprises another capacitor (75) connected in parallel with the secondary winding (72) of the current transformer (70) in order to form with the inductance ($L_{72}$) of the latter a resonance circuit whose resonant period is greater than the maximum duration of the switch-off interval of the electronic interrupter comprising the transistor (1).

4. Control circuit according to any one of claims 1 and 2, characterized in that it further comprises another resistor (91) connected between the base and the emitter of the transistor (1) and forming with the biasing resistor (90) of said base a resistive voltage divider (92), the value of said other resistor (91), intended to dampen the oscillations of the resonance circuit formed by the inductance of the secondary winding (72) and the capacitive component of the impedance of the reverse biased base-emitter junction, being chosen so as to make the negative crest amplitude of the base-emitter voltage less than the Zener breakdown voltage of said junction.

5. Control circuit according to one of the preceding claims, characterized in that it further comprised a circuit for the variable negative biasing of the gate of the thyristor (25) in dependence upon the supply voltage ($V_9$) furnished by the source (5).

6. Control circuit according to claim 5, characterized in that the circuit for the variable biasing of the gate comprises a winding (61) magnetically coupled to the chopper inductor (60) and feeding in cascade a negative crest value rectifier (63, 64) and a filter member (65, 66) whose output (67) is connected by way of a resistor (68) forming with the gate resistor (26) a resistive voltage divider, to the gate of the thyristor (25).

7. Control circuit according to one of claims 3, 5 and 6, characterized in that the power switching transistor (1) is replaced therein by a thyristor blockable via the gate in such a manner that the primary winding (71) of the current transformer (70) is connected to the anode thereof and that the secondary winding (72) of said transformer (70) is coupled between its gate and its anode.

8. Static direct-direct or direct-a.c. converter of the type in which the chopper interrupter (4) comprising a power switching transistor (1) is connected in series with a chopper inductor (60) comprising the primary winding of a supply transformer between the poles (6, 7) of a supply d.c. voltage source (5), characterized in that it comprises a control circuit for the base of said transistor (1) according to one of claims 1 to 6 or the gate of the thyristor according to claim 7.

9. Static converter according to claim 8 of the type in which the chopper interrupter (4) is of bidirectional conduction and unidirectional control type, which comprises a diode (2) connected in parallel with the collector-emitter path of the transistor (1) to conduct in the opposite direction, characterized in that the cathode of the diode (2) is connected to the connection of the primary winding (71) of the current transformer (70) to the chopper inductor (60).

10. Static converter according to any one of claims 8 and 9 of the type in which the chopper circuit (200) comprises a tuning capacitor (3) forming with the chopper inductor (60) a resonance circuit during the opening of the interrupter (4), characterized in that one of the coatings of the tuning capacitor (3) is connected to the connection of the primary winding (71) of the current transformer (70) to the chopper inductor (60).

FIG_1

FIG_2

0 043 761

2/3

FIG. 3-A — $V_{CE1} \equiv V_3$, $V_9$, $t_0$, $t_2$, $t_3$, $t_4$, $t_5$, $t_6$, $t_8$, $\pi \sqrt{L_{60} C_3}$

FIG. 3-B — $I_{60}$, $t_0$, $t_2$, $t_3$, $t_4$, $t_5$, $t_6$

FIG. 3-C — $I_{C1}$, $t_0$, $t_2$, $t_5$, $t_6$

FIG. 3-D — $I_{B1}$, $t_0$, $t_1$, $t_2$, $t_5$, $t_6$, $t_7$, $t_8$

FIG. 3-E — $V_{BE1}$, $T_s$, $V_{BEsat} = 0{,}7\,\text{volts}$, $t_0$, $t_2$, $t_5$, $t_6$

FIG. 3-F — $V_{72}$, $t_0$

FIG. 3-G — $V_{K25} \equiv V_{24}$, $V_{GT25}$, $t_0$, $t_1$, $t_2$, $t_6$, $t_7$, $t_8$

17

# FIG_4

# FIG_5-A

# FIG_5-B